# EUROPÄISCHE PATENTSCHRIFT

(11) **EP 1 837 206 B1**
(45) Veröffentlichungstag und Bekanntmachung des Hinweises auf die Patenterteilung: **24.04.2013**
(21) Anmeldenummer: 07101287.6
(22) Anmeldetag: 29.01.2007
(51) Int. Cl.: B60C 11/00

(54) **Fahrzeugluftreifen**
Pneumatic tyres for a vehicle
Pneumatique de véhicule

(30) Priorität: 18.03.2006 DE 102006012536
(43) Veröffentlichungstag der Anmeldung: 26.09.2007
(73) Patentinhaber: Continental Reifen Deutschland GmbH, 30165 Hannover (DE)
(72) Erfinder: Weber, Christian, 30826 Garbsen (DE); Kleffmann, Jens, 30165 Hannover (DE); Kramer, Thomas, 31832 Springe (DE); Haufe, Matthias, 31535 Neustadt (DE)
(74) Vertreter: Finger, Karsten

(56) Entgegenhaltungen:
- EP-A2- 1 016 555
- JP-A- 2000 326 706
- US-A1- 2002 036 041

## Beschreibung

Die Erfindung betrifft einen Fahrzeugluftreifen, insbesondere für Nutzfahrzeuge, mit einer Radialkarkasse, einem mehrlagigen Gürtel und einem Laufstreifen, welcher sich in radialer Richtung aus zwei aus unterschiedlichen Gummimischungen bestehenden Schichten, einer Laufstreifencap und einer Laufstreifenbase, zusammensetzt, wobei die Laufstreifenbase in axialer Richtung betrachtet einen zentralen Abschnitt und zwei seitliche Abschnitte aufweist, wobei der zentrale Abschnitt aus einer Gummimischung besteht, die hystereseärmer ist als die Gummimischung der beiden seitlichen Abschnitte.

Es ist üblich, Fahrzeugluftreifen, und zwar sowohl Reifen für Personenkraftwagen als auch für Nutzfahrzeuge, mit einem zweiteiligen Laufstreifen zu versehen, welcher aus einer Laufstreifencap, die beim Abrollen des Reifens mit dem Untergrund in Kontakt tritt, und aus einer Laufstreifenbase besteht. Die Laufstreifencap wird aus einer hinsichtlich Abrieb optimierten Gummimischung und die Laufstreifenbase aus einer hinsichtlich Hysterese optimierten Gummimischung gefertigt. Aus der DE-A 198 50 766 ist ein Fahrzeugluftreifen der eingangs genannter Art bekannt, dessen Laufstreifen aus einer radial inneren, der Gürtellage zugewandten Laufstreifenbase besteht, welche einen ersten axialen Bereich aufweist, der sich von einer axialen Seite innerhalb der Gürtelbreite über den Kronenbereich zur anderen axialen Seite innerhalb der Gürtelbreite erstreckt und aus einer ersten Laufstreifenkautschukmischung besteht. An diesen Bereich schließen zweite Bereiche an, die sich axial innerhalb der Gürtelbreite über die axiale Position der Gürtellagenkanten im Reifenschulterbereich hinaus erstrecken und aus einer zweiten Laufstreifenkautschukmischung bestehen. Die zweite Kautschukmischung ist härter und insbesondere hysteresereicher als die erste Kautschukmischung. Ein Reifen mit einem derart ausgeführten Laufstreifen soll einen geringeren Rollwiderstand aufweisen.

Ein gattungsbildender Fahrzeugluftreifen ist auch aus der EP 1016555 A2 bekannt.

Der Erfindung liegt die Aufgabe zugrunde, bei einem Reifen der eingangs genannten Art die Laufstreifenbase weiter zu optimieren, insbesondere um die Gürtelhaltbarkeit an den üblicherweise kritischen Gürtelkanten sowie den Rollwiderstand zu verbessern.

Gelöst wird die gestellte Aufgabe erfindungsgemäß dadurch, dass die seitlichen Abschnitte der Laufstreifenbase eine höhere Wärmeleitfähigkeit aufweisen als die Laufstreifencap und als der zentrale Abschnitt der Laufstreifenbase.

Die Erfindung ermöglicht durch die Verwendung einer gut wärmeleitfähigen Mischung in den seitlichen Abschnitten der Laufstreifenbase in Kombination mit der besonders hysteresearmen Mischung im zentralen Abschnitt eine weitere Optimierung der Eigenschaften der Laufstreifenbase, insbesondere hinsichtlich der Gürtelhaltbarkeit, des Rollwiderstandes und der Abriebsfestigkeit im Bereich der Gürtelkante. Aus FEM-Berechnungen lässt sich ableiten, dass durch die erfindungsgemäße Mischungskombination der Rollwiderstand um mindestens 2 % reduzierbar und die Gürtelhaltbarkeit um mehr als 10 % verbesserbar sind.

Die hystereseärmere Mischung im zentralen Abschnitt der Laufstreifenbase weist einen tan δ auf, der kleiner ist als jener der Mischung in den beiden seitlichen Abschnitten. Die Mischung im zentralen Abschnitt ist bevorzugt hinsichtlich Hysterese-Verluste optimiert, ihr tan δ beträgt daher zwischen 0,03 und 0,08 (bei 60 °C und 10 Hz, ermittelt gemäß DIN 53513), jener der Mischung in den seitlichen Abschnitten zwischen 0,04 und 0,1. Für die Ermittlung der tan δ-Werte werden zylindrische Prüfkörper nach Aufbringung einer statischen Druckverformung einer überlagerten sinusförmigen Druckbeanspruchung unterworfen. Bei konstanter Frequenz wird ein Temperaturbereich abgefahren. Basierend auf den bei dynamischer Beanspruchung ermittelten Größen der Kraft-/Weg-Amplituden und des Phasenwinkels erfolgt die Berechnung aller viskoelastischen Kenngrößen, einschließlich des tan δ. Der tan δ ist ein Relativmaß für den Energieverlust im Vergleich zur wieder gewonnenen Energie.

Die Mischung der seitlichen Abschnitte der Laufstreifenbase zeigt eine erhöhte Wärmeleitfähigkeit im Bereich von 0,3 W/mK bis 0,5 W/mK. Eine gute Wärmeleitfähigkeit der Mischung der seitlichen Abschnitte lässt sich vorzugsweise dadurch erreichen, dass die Mischung der seitlichen Abschnitte Acetylenruß in einem Anteil von 10 bis 60 Gewichtsteilen, bezogen auf 100 Gewichtsteile Kautschuk in der Ausgangsmischung, enthält. Eine derartige Mischung stellt einen sehr guten Kompromiss hinsichtlich der Gürtelhaltbarkeit, des Rollwiderstandes und der Abriebsfestigkeit im Bereich der Gürtelkanten dar.

Um die Mischung im zentralen Abschnitt hinsichtlich Hysterese-Verluste zu optimieren, enthält diese vorzugsweise einen gering aktiven Ruß, beispielsweise Ruß des Typs N 660, in einem Anteil von 10 bis 70 Gewichtsteilen, bezogen auf 100 Gewichtsteile Kautschuk in der Ausgangsmischung, ferner zusätzlich oder alternativ Silika in einem Anteil von 5 bis 60 Gewichtsteilen, ebenfalls bezogen auf 100 Gewichtsteile Kautschuk in der Ausgangsmischung.

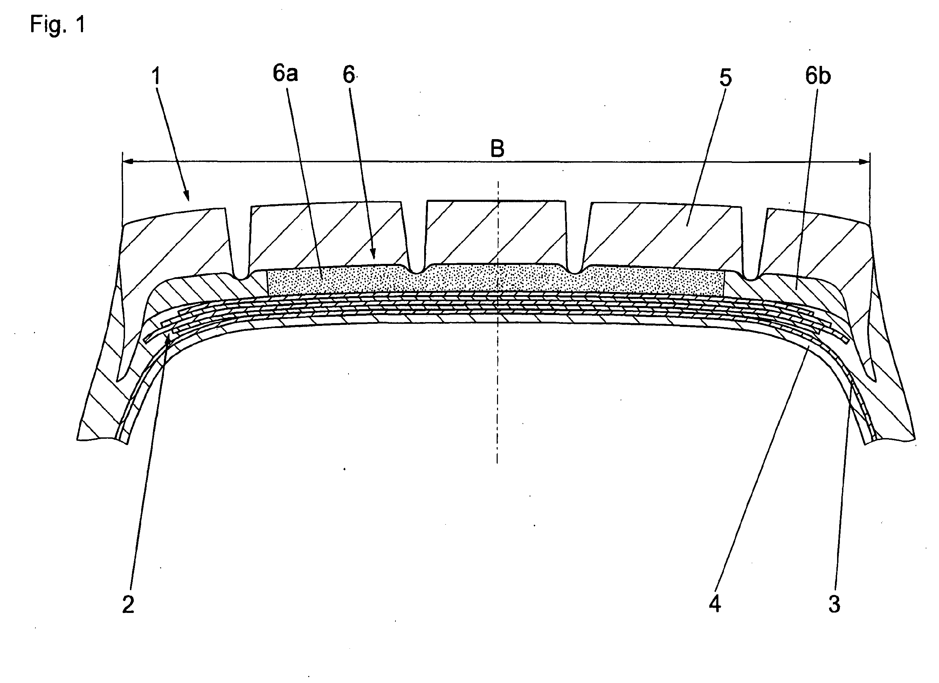

Weitere Merkmale, Vorteile und Einzelheiten der Erfindung werden anhand der Zeichnung, die schematisch ein Ausführungsbeispiel darstellt, näher beschrieben. Dabei zeigt die einzige Zeichnungsfigur, Fig. 1 einen Querschnitt durch den Laufstreifenbereich eines erfindungsgemäßen Fahrzeugluftreifens für ein Nutzfahrzeug.

Fig. 1 zeigt von den üblichen Bauteilen eines Luftreifens für Nutzfahrzeuge einen Laufstreifen 1, einen Gürtel 2 mit vorzugsweise vier Gürtellagen bestehend aus in Gummi eingebetteten, vorzugsweise aus Stahlkord bestehenden Festigkeitsträgern, einer ebenfalls mit Festigkeitsträgern verstärkten Radialkarkasse 3 und einer luftdichten Innenschicht 4. Von den Seitenwänden des Reifens sind lediglich die axial äußeren Endabschnitte dargestellt. Nicht gezeigt sind die Wulstbereiche mit Wulstkernen und Kernprofilen.

Der Laufstreifen 1 besteht aus einer radial äußeren Gummischicht, der Laufstreifencap 5 und einer radial inneren Gummischicht, der Laufstreifenbase 6. Die Laufstreifenbase 6 weist eine im Wesentlichen konstante Dicke in der Größeordnung von 2 mm bis 4 mm auf und ist in axialer Richtung dreigeteilt, sodass sie aus einem zentralen Abschnitt 6a und zwei seitlichen Abschnitten 6b besteht. Der zentrale Abschnitt 6a erstreckt sich zentrisch zur Reifenmitte über eine Breite von 60 % bis 80 % der Laufstreifenbreite B, die der Laufstreifen unter den in der E.T.R.T.O. genormten Bedingungen in der Kontaktfläche mit dem Untergrund aufweist. Die beiden seitlichen Abschnitte 6b sind bei der dargestellten Ausführungsform gleich breit und symmetrisch zur Reifenmitte angeordnet.

Die beiden seitlichen Abschnitte 6b bestehen aus einer hysteresearmen, relativ abriebsbeständigen und insbesondere auch gut wärmeleitenden Gummimischung. Der zentrale Abschnitt 6a ist aus einer besonders hysteresearmen Gummimischung hergestellt, deren Hysterese jedenfalls geringer ist als jene der Mischung in den beiden seitlichen Abschnitten 6b. Die Mischung im zentralen Abschnitt 6a ist daher hinsichtlich Hysterese-Verluste optimiert und weist einen kleineren tan δ auf als die Gummimischung der seitlichen Abschnitte 6b. Der tan δ der Gummimischung des zentralen Abschnittes 6a der Laufstreifenbase 6 beträgt zwischen 0,03 und 0,08 (bei 60°C und 10 Hz, ermittelt gemäß DIN 53513). Geringe Hysterese-Verluste lassen sich beispielsweise mit einer Mischung erzielen, welcher Füllstoffe mit einer geringen Aktivität beigemengt sind. Geeignet ist daher der Einsatz eines Rußes niedriger Aktivität mit einer Jodadsorption <60 g/kg (gemäß ASTM-D 1510), beispielsweise eines Rußes des Typs N660. Eine weitere Möglichkeit ist der Einsatz von aktiviertem Silika (Kieselerde) als Füllstoff. Der Anteil an Ruß niedriger Aktivität beträgt zwischen 15 bis 70 Gewichtsteile, bezogen auf 100 Gewichtsteile Kautschuk in der Mischung. Der Anteil an Silika in der Mischung beträgt zwischen 0 und 60 Gewichtsteile, ebenfalls bezogen auf 100 Gewichtsteile Kautschuk in der Mischung.

Die besonders hysteresearme Mischung im zentralen Abschnitt 6a der Laufstreifenbase 6 sorgt für einen guten Rollwiderstand des Reifens. Dass diese Mischung eine relativ geringe Abriebsbeständigkeit aufweist, spielt keine Rolle, da die Laufstreifenbase im Zentralbereich beim Betrieb des Reifens nicht freigelegt wird.

In den beiden seitlichen Abschnitten 6b der Laufstreifenbase 6 wird eine Mischung eingesetzt, welche ebenfalls hysteresearm ist, einen tan δ zwischen 0,04 und 0,10 aufweist, wobei, wie bereits erwähnt, der tan δ dieser Mischung größer ist als jener der Mischung im Abschnitt 6a. Die Mischung in den seitlichen Abschnitten besitzt ferner eine gute Wärmeleitfähigkeit und eine gute Abriebsbeständigkeit. Die Wärmeleitfähigkeit der seitlichen Abschnitte 6b sollte zumindest der Wärmeleitfähigkeit der Laufstreifencap 5 betragen, insbesondere um mindestens 10 % größer sein als die Wärmeleitfähigkeit der Laufstreifencap 5. Eine gute Wärmeleitfähigkeit der Mischung der seitlichen Abschnitte 6b lässt sich beispielsweise durch den Einsatz von Acetylenruß oder durch einen zumindest teilweisen Ersatz des üblichen Standardrußes durch Acetylenruß erreichen. Der Anteil an Acetylenruß beträgt zwischen 10 und 60 Gewichtsteile, bezogen auf 100 Gewichtsteile Kautschuk in der Ausgangsmischung. Die Wärmeleitfähigkeit der Mischung der seitlichen Abschnitte 6b der Laufstreifenbase 6 sollte im Bereich von 0,3 W/mK bis 0,5 W/mK betragen.

Acetylenruß zeichnet sich durch einen überdurchschnittlichen Gehalt an graphitähnlichen Strukturen und einen sehr niedrigen Gehalt an sauerstoffhaltigen Gruppen aus. Acetylenruße weisen in der Regel eine DBP Zahl (Dibutylphthalat-Zahl) gemäß ASTM-D 2414 zwischen 150 und 260 cm³/100g und eine Jodadsorptionszahl größer 85 g/kg auf. Die Teilchendurchmesser der Primärpartikel liegen zwischen 30 und 45 nm.

Die nachstehende Tabelle 1 enthält Beispiele von Mischungen, eine Referenzmischung M_{R}, eine Mischung M_{Z} für den zentralen Abschnitt 6a und eine Mischung M_{S} für die seitlichen Abschnitte 6b. Die Anteile der einzelnen Mischungsbestandteile sind in Gewichtsteilen, bezogen auf 100 Gewichtsteile Kautschuk in der Mischung, angegeben. Die Polymerkomponente ist in sämtlichen Mischungsbeispielen Naturkautschuk, kann aber auch beliebig aus den einem Fachmann für die Herstellung von Laufstreifenbasemischungen für Fahrzeugluftreifen geläufigen Polymeren und Polymerverschnitten gewählt werden. Zu den weiteren Mischungsbestandteilen zählen die üblichen Zusatzstoffe, wie Zinkoxid, Schwefel, Beschleuniger, Verarbeitungshilfsmittel und Alterungsschutzmittel. Ihre Anteile entsprechen den für derartige Mischungen üblichen Anteilen und sind daher gesondert nicht angegeben. Die Referenzmischung M_{R} enthält als Füllstoff einen Ruß mittlerer Aktivität (Jodadsorption 60 - 100 g/kg), beispielsweise Ruß des Typs N326, in einem Anteil von 35 Gewichtsteilen. Das Mischungsbeispiel M_{Z} für den zentralen Abschnitt 6a der Laufstreifenbase 6 enthält als Füllstoffe einen wenig aktiven Ruß (Jodadsorption <60 g/kg), beispielsweise Ruß des Typs N660, in einem Anteil von 40 Gewichtsteilen sowie zusätzlich aktiviertes Silika in einem Anteil von 10 Gewichtsteilen. Die Mischung Mₛ für die seitlichen Abschnitte 6b der Laufstreifenbase 6 enthält als Füllstoff Acetylenruß in einem Anteil von 45 Gewichtsteilen.

**Tabelle 1**

| | M_{R} | M_{Z} | M_{S} |
|---|---|---|---|
| Naturkautschuk | 100 | 100 | 100 |
| Mittelaktiver Ruß | 35 | | |
| Niedrigaktiver Ruß | | 40 | |
| Silika aktiviert | | 10 | |
| Acetylenruß | | | 45 |
| ZnO, Schwefel, Beschleuniger und Prozesshilfsmittel in den üblichen Mengen | | | |

Aus den Mischungen M_{R}, M_{Z}, M_{S} wurden vulkanisierte Prüfkörper hergestellt, die zur Bestimmung einiger Materialeigenschaften Tests unterzogen wurden. Die gemessenen Werte für diese Materialeigenschaften, die nach den nachfolgenden Messverfahren bestimmt wurden, sind in Tabelle 2 enthalten:

### Rückprall bei Raumtemperatur:

Gemäß DIN 53512; ein Pendelhammer wird aus waagerechter Stellung auf den Prüfköper fallen gelassen. Die Rückprallhöhe des Pendels wird bestimmt. Das Verhältnis aus Rückprallhöhe und Fallhöhe in Prozent entspricht der Rückprallelastizität, einfach kurz auch Rückprall genannt.

### Wärmeleitfähigkeit:

Gemäß DIN 52612; ein dünner Heizdraht, der durch das Zentrum einer Probe führt, wird erhitzt; der Wärmefluss wird mittels eines Thermoelements an einer Referenz bestimmt und daraus die Wärmeleitfähigkeit bestimmt.

### Abrieb:

Groschabrieb; ein freirollendes Prüfrad mit der zu untersuchenden Mischung läuft auf einer rotierenden Schleifscheibe unter einem eingestellten Schräglaufwinkel bei vorgegebener Last, Geschwindigkeit und Strecke; bei verschiedenen Prüfbedingungen wird die Menge an abgeriebener Mischung als Maß für den Abrieb gemessen.

**Tabelle 2**

| | M_{R} | M_{Z} | M_{S} |
|---|---|---|---|
| Rückpra11 RT | 100 | 130 | 105 |
| Wärmeleitfähigkeit | 100 | 105 | 135 |
| Abrieb | 100 | 80 | 100 |

FEM - Berechnungen wurden an einem Reifenmodell der Dimension 295/60 R 22.5 HSR1 durchgeführt. Die Berechnung des Rollwiderstands und der Gürtelhaltbarkeit erfolgte über die in das FEM - Programm eingegebenen Materialparameter und die sich letztendlich daraus ergebenden Spannungen und Temperaturen. Simuliert wurde mit einer Reifenauslastung von 100 % und einer Geschwindigkeit von 80 km/h. Insgesamt vier Ausführungen wurden berechnet. Bei drei Ausführungen wurde eine Laufstreifenbase angenommen, die ausschließlich aus den Mischungen M_{R}, M_{S} bzw. M_{Z} bestand, bei der vierten Variante erfolgt eine Aufteilung der Laufstreifenbase entsprechend der Erfindung mit der Mischung M_{S} oberhalb der Gürtelkanten und der Mischung M_{Z} im Zenit des Reifens. Die Abschnitte 6b der Laufstreifenbase 6 aus der Mischung M_{S} nahmen dabei je 15 % der Gesamtbreite der Laufstreifenbase 6 ein, der zentrale Abschnitt 6a der Laufstreifenbase 6 aus der Mischung M_{Z} entsprach somit 70 % der Gesamtbreite.

Die in Tabelle 3 enthaltenen Ergebnisse der FEM - Berechnungen zeigen, dass durch die Verwendung der Mischungen M_{S} oder M_{Z} die Gürtelhaltbarkeit um über 10 % verbessert werden kann im Vergleich zur Referenz M_{R}. Eine Verbesserung des Rollwiderstands um 3 % lässt sich lediglich durch den Einsatz der Mischung M_{Z} erreichen. Eine Kombination der Mischung M_{z} im zentralen Abschnitt 6a und einer Mischung M_{S} in den seitlichen Abschnitten 6b verbessert die Gürtelhaltbarkeit ebenfalls um 10 %. Der Rollwiderstand kann um 2 % reduziert werden. Das ist etwas weniger als im bei einer ausschließlichen Verwendung der Mischung M_{Z}, allerdings kommt hier auf der Gürtelkante 1 die abriebsbeständigere Mischung M_{S} zu liegen. Diese erfindungsgemäße Kombination stellt somit den optimalen Kompromiss bezüglich Haltbarkeit, Rollwiderstand und Abriebsbeständigkeit dar.

**Tabelle 3**

| Base | M_{R} (Ref.) | M_{Z} | M_{S} | M_{Z}+M_{S} kombiniert |
|---|---|---|---|---|
| Rollwiderstand | 100 | 97 | 99.5 | 98 |
| Gürtelhaltbarkeit | 100 | 111 | 113 | 113 |

## Patentansprüche

1. Fahrzeugluftreifen, insbesondere für Nutzfahrzeuge, mit einer Radialkarkasse (3), einem mehrlagigen Gürtel (2) und einem Laufstreifen (1), welcher sich in radialer Richtung aus zwei aus unterschiedlichen Gummimischungen bestehenden Schichten, einer Laufstreifencap (5) und einer Laufstreifenbase (6), zusammensetzt, wobei die Laufstreifenbase (6) in axialer Richtung betrachtet einen zentralen Abschnitt (6a) und zwei seitliche Abschnitte (6b) aufweist, wobei der zentrale Abschnitt (6a) aus einer Gummimischung besteht, die hystereseärmer ist als die Gummimischung der beiden seitlichen Abschnitte (6b),
**dadurch gekennzeichnet,**
**dass** die seitlichen Abschnitte (6b) der Laufstreifenbäse (6) eine höhere Wärmeleitfähigkeit aufweisen als die Laufstreifencap (5) und als der zentrale Abschnitt (6a) der Laufstreifenbase (6).

2. Fahrzeugluftreifen nach Anspruch 1, **dadurch gekennzeichnet, dass** die Mischung des zentralen Abschnittes (6a) der Laufstreifenbase (6) einen tan δ aufweist, der größer ist als jener der Mischung der seitlichen Abschnitte (6b).

3. Fahrzeugluftreifen nach Anspruch 1, **dadurch gekennzeichnet, dass** die Mischung des zentralen Abschnittes (6a) der Laufstreifenbase (6) einen tan δ von 0,03 bis 0,08 aufweist.

4. Fahrzeugluftreifen nach Anspruch 1 oder 2, **dadurch gekennzeichnet, dass** die Mischung der seitlichen Abschnitte (6b) der Laufstreifenbase (6) einen tan δ von 0,04 bis 0,1 aufweist.

5. Fahrzeugluftreifen nach einem der Ansprüche 1 bis 4, **dadurch gekennzeichnet, dass** die Mischung der seitlichen Abschnitte (6b) der Laufstreifenbase (6) eine Wärmeleitfähigkeit von 0,3 W/mK bis 0,5 W/mK aufweist.

6. Fahrzeugluftreifen nach einem der Ansprüche 1 bis 5, **dadurch gekennzeichnet, dass** die Mischung der seitlichen Abschnitte (6b) der Laufstreifenbase (6) Acetylenruß in einem Anteil von 10 bis 60 Gewichtsteilen, bezogen auf 100 Gewichtsteile Kautschuk in der Ausgangsmischung, enthält.

7. Fahrzeugluftreifen nach einem der Ansprüche 1 bis 6, **dadurch gekennzeichnet, dass** die Mischung für den zentralen Abschnitt (6a) der Laufstreifenbase (6) einen gering aktiven Ruß, beispielsweise Ruß des Typs N660, in einem Anteil von 10 bis 70 Gewichtsteilen, bezogen auf 100 Gewichtsteile Kautschuk in der Ausgangsmischung, enthält.

8. Fahrzeugluftreifen nach einem der Ansprüche 1 bis 7, **dadurch gekennzeichnet, dass** die Mischung für den zentralen Abschnitt (6a) der Laufstreifenbase (6) Silika in einem Anteil von 5 bis 60 Gewichtsteilen, bezogen auf 100 Gewichtsteile Kautschuk in der Ausgangsmischung, enthält.

## Claims

1. Pneumatic vehicle tyre, in particular for commercial vehicles, with a radial carcass (3), a multi-ply breaker belt (2) and a tread rubber (1), which is made up in the radial direction of two layers consisting of different rubber mixtures, a tread cap (5) and a tread base (6), the tread base (6) having, when viewed in the axial direction, a central portion (6a) and two lateral portions (6b), the central portion (6a) consisting of a rubber mixture of a lower hysteresis than the rubber mixture of the two lateral portions (6b), **characterized in that** the lateral portions (6b) of the tread base (6) have a higher thermal conductivity than the tread cap (5) and than the central portion (6a) of the tread base (6).

2. Pneumatic vehicle tyre according to Claim 1, **characterized in that** the mixture of the central portion (6a) of the tread base (6) has a tan δ that is greater than that of the mixture of the lateral portions (6b).

3. Pneumatic vehicle tyre according to Claim 1, **characterized in that** the mixture of the central portion (6a) of the tread base (6) has a tan δ of 0.03 to 0.08.

4. Pneumatic vehicle tyre according to Claim 1 or 2, **characterized in that** the mixture of the lateral portions (6b) of the tread base (6) has a thermal conductivity of 0.3 W/mK to 0.5 W/mK.

5. Pneumatic vehicle tyre according to one of Claims 1 to 4, **characterized in that** the mixture of the lateral portions (6b) of the tread base (6) has a tan δ of 0.04 to 0.1.

6. Pneumatic vehicle tyre according to one of Claims 1 to 5, **characterized in that** the mixture of the lateral portions (6b) of the tread base (6) contains acetylene black in a proportion of 10 to 60 parts by weight, on the basis of 100 parts by weight of rubber in the initial mixture.

7. Pneumatic vehicle tyre according to one of Claims 1 to 6, **characterized in that** the mixture for the central portion (6a) of the tread base (6) contains a low-activity carbon black, for example carbon black of the type N660, in a proportion of 10 to 70 parts by weight, on the basis of 100 parts by weight of rubber in the initial mixture.

8. Pneumatic vehicle tyre according to one of Claims 1 to 7, **characterized in that** the mixture for the central portion (6a) of the tread base (6) contains silica in a proportion of 5 to 60 parts by weight, on the basis of 100 parts by weight of rubber in the initial mixture.

## Revendications

1. Pneumatique de véhicule, en particulier pour des véhicules utilitaires, avec une carcasse radiale (3), une nappe d'armature à plusieurs couches (2) et une bande de roulement (1), qui se compose en direction radiale de deux couches constituées de mélanges de gomme différents, un chapeau de bande de roulement (5) et une base de bande de roulement (6), dans lequel la base de bande de roulement (6), considérée en direction radiale, présente une partie centrale (6a) et deux parties latérales (6b), dans lequel la partie centrale (6a) se compose d'un mélange de gomme qui présente moins d'hystérésis que le mélange de gomme des deux parties latérales (6b), **caractérisé en ce que** les parties latérales (6b) de la base de bande de roulement (6) présentent une plus grande conductibilité thermique que le chapeau de bande de roulement (5) et que la partie centrale (6a) de la base de bande de roulement (6).

2. Pneumatique de véhicule selon la revendication 1, **caractérisé en ce que** le mélange de la partie centrale (6a) de la base de bande de roulement (6) présente une tan δ, qui est supérieure à celle du mélange des parties latérales (6b).

3. Pneumatique de véhicule selon la revendication 1, **caractérisé en ce que** le mélange de la partie centrale (6a) de la base de bande de roulement (6) présente une tan δ de 0,03 à 0,08.

4. Pneumatique de véhicule selon la revendication 1 ou 2, **caractérisé en ce que** le mélange des parties latérales (6b) de la base de bande de roulement (6) présente une tan δ de 0,04 à 0,1.

5. Pneumatique de véhicule selon l'une quelconque des revendications 1 à 4, **caractérisé en ce que** le mélange des parties latérales (6b) de la base de bande de roulement (6) présente une conductibilité thermique de 0,3 W/mK à 0,5 W/mK.

6. Pneumatique de véhicule selon l'une quelconque des revendications 1 à 5, **caractérisé en ce que** le mélange des parties latérales (6b) de la base de bande de roulement (6) contient du noir d'acétylène en une proportion de 10 à 60 parties en poids, rapportées à 100 parties en poids de caoutchouc dans le mélange initial.

7. Pneumatique de véhicule selon l'une quelconque des revendications 1 à 6, **caractérisé en ce que** le mélange destiné à la partie centrale (6a) de la base de bande de roulement (6) contient du noir de carbone faiblement actif, par exemple du noir de carbone du type N660, en une proportion de 10 à 70 parties en poids, rapportées à 100 parties en poids de caoutchouc dans le mélange initial.

8. Pneumatique de véhicule selon l'une quelconque des revendications 1 à 7, **caractérisé en ce que** le mélange destiné à la partie centrale (6a) de la base de bande de roulement (6) contient de la silice en une proportion de 5 à 60 parties en poids, rapportées à 100 parties en poids de caoutchouc dans le mélange initial.
